# EUROPÄISCHE PATENTSCHRIFT

(11) **EP 0 880 476 B1**
(45) Veröffentlichungstag und Bekanntmachung des Hinweises auf die Patenterteilung: **22.03.2000**
(21) Anmeldenummer: 97901550.0
(22) Anmeldetag: 18.01.1997
(51) Int. Cl.: C02F 9/00, C02F 3/06, C02F 3/10

(54) **VERFAHREN UND ANLAGE ZUR ABWASSERAUFBEREITUNG**
PROCESS AND PLANT FOR SEWAGE TREATMENT
PROCEDE ET INSTALLATION POUR LE TRAITEMENT D'EAUX USEES

(30) Priorität: 06.02.1996 DE 19604164; 19.08.1996 DE 19633322
(43) Veröffentlichungstag der Anmeldung: 02.12.1998
(73) Patentinhaber: Wolfgang Schenk GmbH, 06886 Lutherstadt Wittenberg (DE)
(72) Erfinder: SCHENK, Wolfgang, D-06886 Lutherstadt Wittenberg (DE); RIEDELE, Hans-Peter, D-87789 Worringen (DE)
(74) Vertreter: Bockhorni, Josef, Dipl.-Ing.
(86) Internationale Anmeldenummer: EP9700227
(87) Internationale Veröffentlichungsnummer: WO9729056

(56) Entgegenhaltungen:
- DE-U- 9 310 027
- DE-U- 9 400 558
- DE-U- 9 403 225

## Beschreibung

Die Erfindung betrifft ein Verfahren zur Aufbereitung von Abwasser aus Autowaschanlagen in einer mechanischen und einer biologischen Aufbereitungsstufe sowie eine Anlage, die zur Durchführung dieses Verfahrens besonders geeignet ist.

Es ist bekannt, die Waschabwässer von Autowaschanlagen vor Einleitung in die kommunalen Kanalisationen durch Anwendung von Entwässerungsanlagen nach DIN 1986 und DIN 1999 so aufzubereiten, daß sie den Forderungen des Gesetzgebers und der kommunalen Verwaltungen entsprechen. Danach werden die Waschabwässer aus Autowaschanlagen in einem Schlammfang mechanisch gereinigt, in einem Leichtflüssigkeitsabschneider weitgehend von Mineralölkohlenwasserstoffen befreit, in einem Speicherbekken gesammelt und über einen Kontrollschacht in das Abwassersystem eingeleitet. Weitere Stufen, wie chemische und/oder biologische Aufbereitung können in die Waschabwasserreinigung einbezogen sein und dienen der Senkung des Frischwasserbedarfes.

Nach DE-A-26 51 483 wird das Waschabwasser einer Fahrzeugwaschanlage, welches biologisch abbaubare Reinigungs- und Pflegemittel sowie feste Stoffe enthält, gereinigt, indem das Abwasser mit einem polymeren Ausflockungsmittel versetzt und zunächst durch eine Sedimentationszone mit verringerter Wasserströmung und danach über ein Adsorptionsmittel geleitet wird.

DE-U-94 03 225 beschreibt eine Vorrichtung zur Aufbereitung von Abwasser und deren Betriebsweise, bei der das Abwasser nach Durchlaufen eines Schlammfangs und einer biologischen Reinigungsstufe einer Feststoff grob- und feinabscheidung unterzogen wird. Die Feinabscheidung findet im Speicherbecken für das gereinigte Abwasser statt.

DE-C 41 16 082 beschreibt ein Verfahren der Wasseraufbereitung bei Autowaschanlagen, bei dem die anfallenden Waschabwässer mechanisch oder mechanisch und biologisch gereinigt und in die Waschanlage zurückgeführt werden. Die bei der mechanischen Reinigung anfallenden Feststoffe werden zu entsorgungspflichtigen Müllchargen gesammelt. Die Schadstoffe werden bei diesem Verfahren mechanisch oder biologisch in einem Mehrstufenprozeß derart aufbereitet, daß in einem ersten Kreislauf Feststoffe mit Kohlenwasserstoffen und Schadstoffen aus dem von der Autowaschanlage kommenden Abwasser durch Absetzen abgetrennt und gesammelt werden, daß beim Sammeln die Kohlenwasserstoffe und Schadstoffe mit Waschsubstanzen enthaltendem Abwasser aus der Waschzone extrahiert werden und daß in einem zweiten Kreislauf das mechanisch geklärte Abwasser durch Flotation und durch biologische Reaktion von nicht abbaubaren Anteilen befreit wird.

Der gemeinsame Nachteil der bekannten Verfahren besteht darin, daß die Waschabwässer in aufwendigen Mehrstufenprozessen aufbereitet werden müssen. Die anfallenden Feststoffe, in der Regel Flotate und von den Fahrzeugen abgewaschene Sande und Schlämme, müssen als besonders zu behandelnde Müllchargen entsorgt werden. Das Wasser und die sich in der Anlage ansammelnden Feststoffe sind mit Geruch belastet, welcher ein extremes und belästigendes Ausmaß annehmen kann. Die Wiederverwendung der gereinigten Waschabwässer erfordert einen hohen Frischwasseranteil. Das dabei anfallende Überschußwasser ist über einen Kanalanschluß der kommunalen Abwasseraufbereitung zuzuführen.

Der Erfindung liegt somit die Aufgabe zugrunde, nicht nur die Effektivität der Aufbereitung des Waschabwassers für eine vollständige Wiederverwendung zu erhöhen, sondern gleichzeitig die von den Fahrzeugen abgewaschenen Sande und Schlämme zu dekontaminieren und so aufzubereiten, daß sie ohne weiteres einer geeigneten Deponie zugeführt werden können und das Entstehen entsorgungspflichtiger und besonders zu behandelnder Schadstofffrachten, wie Mineralölkohlenwasserstoffe und Flotate vermieden wird. Die Aufbereitung muß nach Zeiten geringer Waschaktivität problemlos wiederaufgenommen werden können.

Die Aufgabe wird mit einem Verfahren der eingangs genannten Art gelöst, bei dem das Abwasser nach Durchlaufen eines Schlammfangs in einem Speicherbecken gesammelt wird, danach über einen Schwebstoffilter in einen Bioreaktor geführt wird und nach der biologischen Klärung in einem Reinwasserbehälter zur erneuten Verwendung gesammelt wird.

Das erfindungsgemäße Verfahren weist eine mechanisch und eine biologisch arbeitende Aufbereitungsstufe aus. Die mechanische Aufbereitungsstufe besteht aus dem Schlammfang, in dem es zur Sedimentation des mitgeführten Grobschmutzes kommt. Im allgemeinen handelt es sich hierbei um mineralische Partikel, die aber häufig durch Mineralölprodukte verunreinigt sind. Auch gröber Mineralölpartikel, beispielsweise vom Wachs- oder Unterbodenschutz eines Kraftfahrzeugs, gelangen in den Schlammfang.

In nicht unerheblichem Umfang findet im Schlammfang auch eine biologische Aufbereitung der Schlammfracht statt. Durch die später beschriebene Rückspülung der Filteranlage und des Bioreaktors gelangen immer wieder mineralölabbauende Mikroorganismen in den Schlammfang, die sich dort ansiedeln und ihrer Bestimmung nachkommen. Auf diese Weise wird ein großer Teil der organischen Fracht des Schlammfangs von den Mikroorganismen zersetzt. Bisherige Erfahrungen haben gezeigt, daß der Inhalt des Schlammfangs nach einigen Monaten zu einer humusähnlichen Masse zersetzt ist, die nicht mehr mit Mineralölbestandteilen kontaminiert ist und problemlos mit dem Hausmüll entsorgt werden kann.

Nach Durchlaufen des Schlammfangs gelangt das Abwasser in ein Speicherbecken, das im wesentlichen als Puffer dient und aus dem kontinuierlich Wasser über eine Filteranlage in den Bioreaktor gepumpt wird. Die Pufferwirkung des Speicherbeckens hat dabei zwei Aspekte, einmal einen Mengenaspekt, da auch bei wechselnder Benutzungsfrequenz der Autowaschanlage ein kontinuierlicher Abwasserstrom an den Bioreaktor abgegeben werden muß. Zum anderen dient das Speicherbecken aber auch als Verdünnungsbecken für hochkonzentrierte Schmutzfrachten, die bei der Reinigung besonders verschmutzter oder mit besonderen Schadstoffen kontaminierter Kraftfahrzeuge anfallen.

Bei dem Schwebstoffilter handelt es sich um einen üblichen Filter zur Entfernung der Schwebstofffracht, der beispielsweise aus mehreren alternierenden Schichten grober und feiner Kiesschüttungen besteht. Der Schwebstoffilter kann mit oder entgegen der Schwerkraft vom Abwasser durchströmt werden und muß hin und wieder zur Reinigung mit sauberen Wasser rückgespült oder aber ausgetauscht werden. Die Füllung des Schwebstoffilters wie des Bioreaktors wird zweckmäßigerweise auf Lochblechen oder dgl. gelagert, unter denen sich der Auslaß befindet.

Der dem Schwebstoffilter nachgeschaltete Bioreaktor kann ebenfalls mit oder entgegen der Schwerkraft vom Abwasser durchströmt werden und beherbergt auf einem geeignetem Trägermaterial Mikroorganismen, die geeignet sind, die in einer Autowaschanlage anfallende Schmutzfracht im Abwasser abzubauen. Es handelt sich dabei in der Regel um aerob arbeitende Bakterien, die an und für sich bekannt sind und mit ebenfalls bekannten Selektionsmechanismen gewonnen werden können.

Das aus dem Bioreaktor austretende Reinwasser wird anschließend in einem Reinwasserbehälter gesammelt und von dort der erneuten Verwendung in der Autowaschanlage zugeführt.

Es versteht sich, daß dem ständigem Verlust an Kreislaufwasser durch Verdunstung und Austrag über gewaschene Kraftfahrzeuge mit der Einspeisung von Reinwasser begegnet werden muß. Es hat sich in einer Versuchsanlage gezeigt, daß mit dem derartig behandelten und ergänztem Abwasser ohne weiters mehrere 10.000 Kreislaufzyklen erreicht werden können.

Zweckmäßgigerweise besteht der Bioreaktor aus einem Festbett aus einem porösen Trägermaterial, das die organischen Inhaltsstoffe des Abwassers absobieren kann und den benötigten Mikroorganismen einen hinreichenden Halt zur Besiedlung bietet. Die Mikroorganismen bilden auf der Oberfläche des Trägermaterials und in den Poren einen Rasen, der das vorbeiströmende Abwasser filtert und die darin enthaltenden Schmutz/Nährstoffe aufnimmt. Die Absorptionswirkung des Trägermaterial fördert diese Wirkung, in dem es die aus dem Abwasser absorbierten Bestandteile den Mikroorganismen zuführt.

Um eine hinreichende Durchlässigkeit des Festbetts für das Waschwasser zu gewährleisten, liegt das poröse Trägermaterial zweckmäßigerweise in Form eines Schüttbettes vor, das abgesehen von dem reinen Porenraum zusätzlichen Raum zwischen den einzelnen Trägerpartikeln bietet. Geeignete poröse Trägermaterialien sind beispielsweise Kohle, Ton, Kieselgel oder Zeolithe in pelletisierter Form oder auch Schaumkunststoffflocken mit einem hinreichend großen Porenvolumen, beispielsweise aus Polyurethan, Polystyrol oder dergleichen. Ein besonders geeignetes Material hat beispielsweise eine Partikelgröße von 1 bis 10 mm, einer Rütteldichte von 0,25 bis 1,0 g/cm³, einem Porenvolumen von 0,40 bis 1,0 cm³/g und einer Oberfläche von mehr als 500 m²/g. Andere Materialien mit vergleichbaren physikalischen Eigenschaften können aber ebenso verwandt werden.

Es versteht sich, daß der Bioreaktor, ebenso wie auch der Schwebstoffilter, regelmäßig rückgespült werden muß, um zu verhindern, daß er sich mit Schwebteilchen zusetzt oder durch übermäßigen Bakterienwuchs blockiert wird. Die Rückspülung des Schwebstoffilters wie auch des Bioreaktors erfolgt so, daß die ausgespülten Materialien in den Schlammfang zurückgetragen werden, wo die dort eingeschwemmten mineralölabbauenden Bakterien ihrerseits tätig werden können.

Es ist zweckmäßig, den Bioreaktor über einen sogenannten Nachlauf auch in Zeiten geringer Waschfrequenz in Betrieb zu halten. Dazu wird zweckmäßigerweise Reinwasser in das Speicherbecken zurückgeführt und von dort über den Schwebstoffilter in den Bioreaktor geführt. Der Kreislauf stellt einen regelmäßigen Durchfluß durch den Bioreaktor und damit auch eine regelmäßige Nährstoffversorgung aus dem Speicher sicher. Gleichzeitig wird erreicht, daß die im Speicherbecken enthaltende Schmutzfracht über Nacht langsam abgebaut wird, was dazu führt, das der erneute Abwasserzulauf am kommenden Tag zunächst einmal mit relativ sauberem Speicherbekkenwasser verdünnt wird und so ein plötzliche Schmutzbelastung der Mikroorganismen vermieden wird.

Wie schon erwähnt, wird der Bioreaktor zweckmäßigerweise aerob betrieben. Hierzu reicht in der Regel die im Waschwasser enthaltende Sauerstoffmenge nicht aus. Es ist deshalb zweckmäßig, Sauerstoff oder Luft in den Bioreaktor einzuführen, zweckmäßigerweise über einen Luftinjektor. Dazu wird ein Teil des aus dem Bioreaktor ablaufenden Wasser abgezweigt, mit Luft gesättigt und in den Bioreaktor zurückgeführt. Es ist aber auch ohne weiteres möglich, aus dem Reinwassertank Wasser in den Bioreaktor zurückzuführen, das zuvor mit Luft gesättigt wurde.

Der Reinwassertank sammelt das aus dem Bioreaktor ablaufende Reinwasser und stellt dieses für die erneute Verwendung im Waschzyklus bereit. Ein hinreichend großes Volumen stellt sicher, daß genügend Wasser sowohl für Reinigungszwecke als auch für das Aufbereitungsverfahren (Rückspülung, Nachlauf) zur Verfügung stehen. Das an die Waschanlage abgegebene Reinwasser kann zunächst über eine Entkeimung sterilisiert werden, beispielsweise mit Hilfe von UV-Strahlung.

Es versteht sich, daß die im Waschprozeß eingesetzten Pflegemittel keine biostatischen oder bioziden Bestandteile aufweisen und vollständig biologisch abbaubar sind. Die Geschwindigkeit des biologischen Abbaus ist bei der Dimensionierung der Aufbereitungsanlage zu berücksichtigen; je schneller die Abbaubarkeit, desto kleiner können, innerhalb gewisser Grenzen, das Speicherbecken, der Bioreaktor und der Reinwassertank ausgelegt werden. Es hat sich gezeigt, daß für eine durchschnittliche Autowaschanlage Schlammfang und Speicherbecken wie auch Reinwassertank ein Auffangvolumen von 6 m³ haben sollten und die Filtereinheit und der Bioreaktor ein Fassungsvermögen von 1 bis 1,5 m³. Als Materialien kommen für alle Leitungen und Behälter sowohl korrosionsbeständige Metalle wie auch den Anforderungen gewachsene Kunststoffe in Frage, insbesondere auch glasfaserverstärkter Kunststoff oder HDPE.

Zweckmäßigerweise wird also das in der Waschanlage anfallende Waschabwasser über einen an sich bekannten Schlammfang einem Speicherbecken zugeführt und aus diesem einen Schwebstoffilter in einen aerob betriebenen Festbettreaktor. Das Trägermaterial des Festbettreaktors ist porös, weist eine große spezifische Oberfläche auf, kann Wasserinhaltsstoffe absorbieren und dient zur Ansiedlung spezieller Mikroorganismen. Das im Reaktor befindliche Wasser wird mittels Umwälzpumpe ständig umgewälzt und über eine geeignete Einrichtung, vorzugsweise einen Injektor, drucklos mit Sauerstoff, vorzugsweisee Luftsauerstoff aus der umgebenden Atmosphäre, angereichert. Die Umwälzgeschwindigkeit kann in weiten Bereichen variiert werden. Sie ist so zu bemessen, daß die Biofilme nicht geschädigt werden. Das Waschabwasser gelangt aus dem Bioreaktor über eine Überlaufregelung in den Reinwassertank. Von hier aus wird es, ggf. über eine Entkeimungsanlage, dem Waschprozeß 100%ig wieder zugeführt.

Es ist vorteilhaft, Wasser aus dem Reinwassertank ohne Entkeimung zur Rückspülung der Anlage oder zur Aufrechterhaltung eines Wasserkreislaufes in Phasen geringer Waschintensität in den Schlammfang zurückzuführen.

Die Rückspülung des Bioreaktors und/oder des Schwebstoffilters wird erforderlich, wenn die Druckdifferenz zwischen Ein- und Ausgang des Schwebstoffilters bzw. des Reaktorbehälters einen Grenzwert als Maß für die Belastung durch zurückgehaltene Schwebstoffe bzw. Überschußbiologie erreicht, beispielsweise 0,5 bar.

Es ist vorteilhaft, wenn die im Waschprozeß eingesetzten Pflegemittel innerhalb von 24 Stunden biologisch abbaubar sind und als Nahrung für die Mikroorganismen dienen.

Es hat sich ferner gezeigt, daß das erfindungsgemäße Verfahren geeignet ist, kontaminiertes Wasser aus dem Werkstattbereich und Zapfsäulenbereich einer Tankstelle aufzunehmen und aufzubereiten. Es versteht sich deshalb, daß zusätzlich zu dem in der Autowaschanlage anfallendem Abwasser derartiges weiteres Abwasser aufbereitet und gereinigt werden kann und mit dem Abwasser verwandt werden kann. Insoweit ist das erfindungsgemäße Verfahren geeignet, die für Tankstellen verlangten Anlagen zur Behandlung von Niederschlagswasser zu ersetzen.

Die mit dem erfindungsgemäßen Verfahren erzielbaren Vorteile bestehen insbesondere darin, daß das Waschabwasser gereinigt in den Waschprozeß zurückgelangt. Der Frischwasserverbrauch reduziert sich damit auf die Ergänzung der Verluste durch Verdunstung und Verschleppung. Bei dem erfindungsgemäßen Verfahren fallen nur dekontaminierte Schlammfanginhalte an. Weitere Reststoffe, die gesondert zu entsorgen oder aufzubereiten sind, fallen nicht an. Überschußwasser kann ohne weiteres an die Kanalisation abgegeben werden.

Die Erfindung betrifft ferner eine Abwasserreinigungsanlage, die insbesondere zur Aufbereitung und Rückführung von Abwasser aus Autowaschanlagen, Werkstätten und/oder Tankstellen geeignet ist und mit der das zuvor beschriebene Verfahren durchgeführt werden kann. Eine solche Abwasserreinigungsanlage verfügt über eine mechanische und eine biologische Reinigungsstufe, wobei ein Schlammfang, ein Speicherbecken, ein Schwebstoffilter, ein Bioreaktor und ein Reinwassertank in Reihe geschaltet sind und über Leitungen miteinander verbunden sind und der Reinwassertank über eine Rückleitung mit dem Speicherbecken verbunden ist, um bei unterbrochener Abwasserversorgung einen Wasserkreislauf über das Speicherbecken, den Schwebstoffilter und den Bioreaktor in den Reinwassertank aufrechtzuerhalten. Es versteht sich, daß die Abwasserreinigungsanlage über die ansonsten erforderlichen Zu- und Abläufe für Abwasser, Reinwasser und ggf. Frischwasser verfügt sowie über die zum Betrieb der Anlage erforderlichen Pumpeinrichtungen sowie eine Steuerungsanlage.

Die Erfindung wird durch die nachfolgenden Abbildungen näher erläutert. Von diesen zeigt
- Fig. 1: schematisch eine erste Auführungsform einer erfindungsgemäßen Abwasseraufbereitungsanlage und
- Fig. 2: eine weitere Ausführungsvariante.

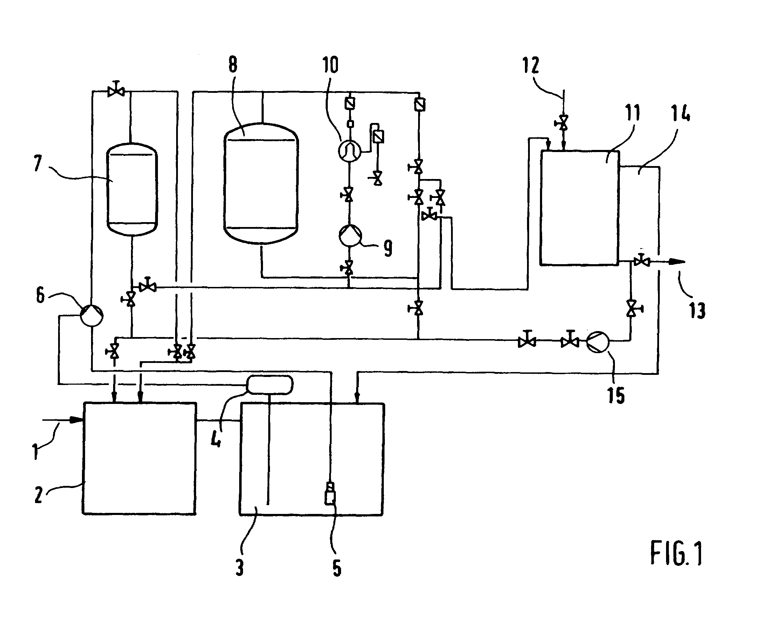

Fig. 1 zeigt das Verfahrensschema der Waschabwasseraufbereitungsanlage. Das in der Autowaschanlage anfallende Waschabwasser wird in einer Abwasserrinne unterhalb der Waschanlage gesammelt und gelangt über Zulauf 1 in den Schlammfang 2. Hier werden die anfallenden Sinkstoffe, wie Sand, Schlamm und ähnliche, zurückgehalten. Das von Sinkstoffen befreite Wasser gelangt in das Speicherbecken 3. Von Füllstandsregelung 4 gesteuert, wird das Waschabwasser mittels Förderpumpe 6 in den Schwebstoffilter 7, einen Kiesfilter, gepumpt. Hier werden eventuell noch vorhandene Schwebstoffe entfernt. Aus dem Schwebstoffilter 7, gelangt das vorgereinigte Waschabwasser in den Festbettreaktor 8. Die Fluid-Phase des Festbettreaktors 8 wird mittels Kreislaufpumpe 9 über Injektor 10 ständig umgewälzt. Im Injektor 10 erfolgt die Anreicherung der Fluid-Phase mit Sauerstoff, vorzugsweise Luftsauerstoff aus der umgebenden Atmosphäre.

Der Festbettreaktor 8 enthält ein poröses Trägermaterial, mit einer hohen spezifischen Oberfläche, die den Mikroorganismen als Besiedelungsfläche dient. Besonders der sich in den Vertiefungen des Trägermaterials bildende Biofilm ist vor mechanischen Scherkräften geschützt.

Das Trägermaterial ist in der Lage, gelöste organische Schadstoffe zu adsorbieren und somit Nahrungsdepot für die Mikroorganismen zu schaffen. Die Anwesenheit dieser Depots in umittelbarer Nähe der Mikroorganismen führt zu einer deutlichen Beschleunigung des biologischen Abbaues.

Aus dem Kreislauf des Festbettreaktors gelangt das gereingte Wasser in den Reinwasserbehälter 11. Aus dem Reinwasserbehälter 11 erfolgt die Versorgung der Autowaschanlage über Abfluß 13, wobei das Wasser eine UV-Entkeimung durchläuft.

In Zeiten geringer Waschaktivität wird Wasser aus Reinwasserbehälter 13 über Pumpe 15 in den Schlammfang 2 zurückgepumpt und durch die Füllstandsregelung 4 der Kreislauf aufrechterhalten.

Sowohl bei Schwebstoffilter 7 als auch bei Festbettreaktor 8 wird die Druckdifferenz zwischen Eingang und Ausgang gemessen. Beim Erreichen eines empirisch ermittelten Grenzwertes ist im jeweiligen Aggregat der Anreicherungsgrad mit Schwebstoffen bzw. Biomasse so groß, daß das Aggregat durch Rückspülen in den Schlammfang wieder regeneriert werden muß. Dies geschieht, indem Wasser aus dem Reinwasserbehälter 11 mittels Pumpe 15 rückwärts durch Festbetteraktor 8 oder Schwebstoffilter 7 in den Schlammfang 2 gefahren wird. Zweckmäßigerweise werden beide Aggregate unabhängig voneinander in der Zeit geringer Waschaktivität rückgespült.

Für den Betrieb der Anlage ist es zweckmäßig, daß die in der Waschanlage eingesetzten Pflegemittel den biologischen Abbauprozeß unterstützen. Beispielsweise werden die Pflegemittel mit den Artikelnummern 181000 bis 185000 der Firma Wolfgang Schenk GmbH dieser Forderung gerecht.

Es versteht sich, daß die Abwasseraufbereitungsanlage vor der Zuschaltung der Autowaschanlage zunächst durch Animpfen des Festbettreaktors mit einer Starterkultur und Umwälzen der flüssigen Phase aktiviert und konditioniert wird.

Im Reinwasserbehälter 11 wird über Frischwasseranschluß 12 nur soviel Frischwasser ergänzt, wie durch Verschleppung oder Verdunstung dem Wasserkreislauf entzogen wird.

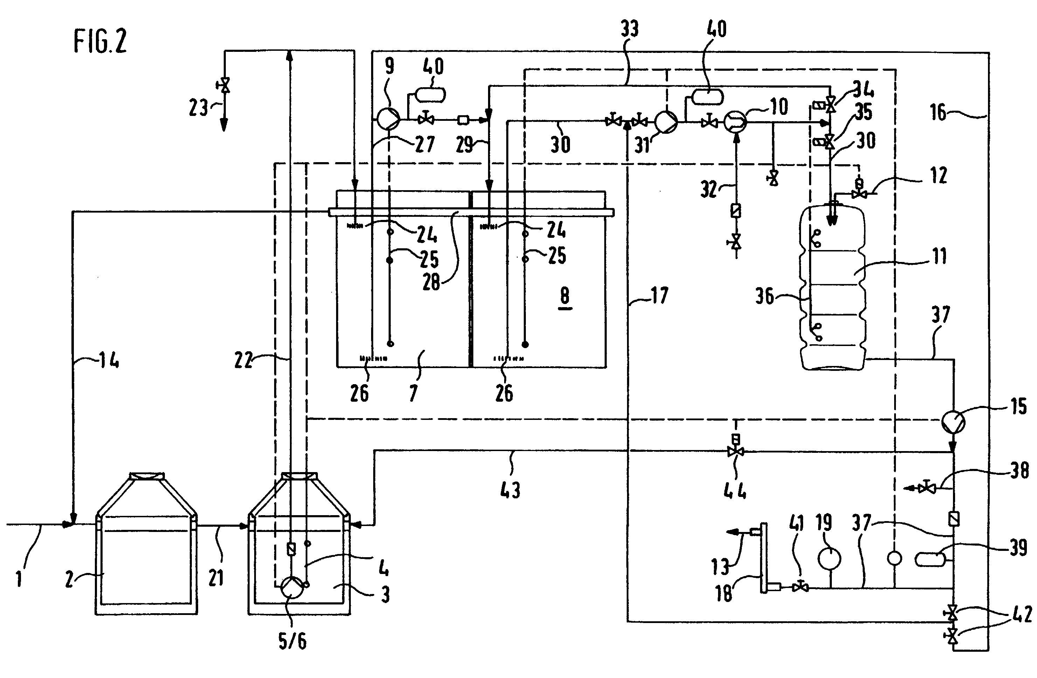

Fig. 2 zeigt eine weitere Variante der erfindungsgemäßen Verfahrensführung. Gleiche Ziffern bezeichnen gleiche Positionen. Die gestrichelten Linien bezeichnen Steuerleitungen zum Betrieb der Anlage.

Das Abwasser aus der Waschanlage, einer Werkstatt oder des Oberflächen-Ablaufwasser eines Tankstellenbereichs kommen über die Zuleitung 1 in den Schlammfang 2, wo die Sedimentation des Grobschmutzes stattfindet. Die Leitung 21 führt weiter in das Speicherbecken 3, das als Puffer für das vom Grobschmutz befreite Abwasser dient. Im Speicherbecken 3 befindet sich eine Füllstandsregelung 4 mit einem oberen und einem unterem Schaltpunkt.

Das Wasser aus dem Speicherbecken 3 wird über einen Saugkörper 5 und die Förderpumpe 6, die in der vorliegenden Ausführungsform eine Einheit bilden, durch die Leitung 22 in den Schwebstoffilter 7 geführt. Eine Leitung 23, die über ein Ventil abgesichert ist, erlaubt die Probennahme von Schmutzwasser aus der Leitung 22.

In den Schwebstoffilter 7 gelangt das Wasser aus dem Speicherbecken 3 über eine Verteilungsspinne 24. Der Filter ist mit alternierenden Lagen gröberen und feineren Kiese gefüllt, die vom Abwasser von oben nach unten durchlaufen werden. Über eine Spinne 26 wird das filtrierte Abwasser mit Hilfe der Pumpe 9 durch die Leitung 27 abgefördert. Eine Füllstandsregelung 25 verhindert das Trockenlaufen der Filtereinrichtung, weist aber auch einen unteren Schaltpunkt auf, mit dem die Filtereinrichtung mehr oder weniger völlig entleert werden kann. Ein Überlauf 28 führt über die Leitung 14 zurück in den Schlammfang 2 und wird im Falle der Rückspülung des Filters 7 benötigt.

Das über die Spinne 26 aus dem Filter abgezogene Wasser gelangt über die Leitung 27 und die Pumpe 9 sowie die Leitung 29 in den Bioreaktor 8. Dort wird es mit Hilfe der Spinne 24 auf die Oberfläche des darin befindlichen porösen Trägermaterials, zweckmäßigerweise Aktivkohlepellets mit großem Porenvolumen und hinreichendem Leerraum zwischen den einzelnen Partikeln verteilt. Das poröse Trägermaterial ist mit den auf die organische Schmutzfracht des Abwassers konditionierten Mikroorganismen besiedelt. Das Abwasser durchläuft das Festbett des Bioreaktors von oben nach unten und wird über die Spinne 26 des Bioreaktors 8 über die Leitung 30 mit Hilfe der Pumpe 31 dem Reinwassertank 11 zugeführt. Eine Füllstandsregelung 25 sorgt, entsprechend zum Schwebstoffilter 7, für die ausreichende Füllung des Bioreaktors 8.

Ein in die Leitung 30 eingschalteter Injektor injiziert über die Leitung 32 angesaugte Luft in das aus dem Bioreaktor 8 abgezogene Wasser. Das mit Luft gesättigte Wasser wird über die Leitung 30 zum einem dem Reinwassertank 11 zugeführt, partiell aber auch über die Leitung 33 in den Bioreaktor zurückgeführt, wo es eine hinreichende Sauerstoffversorgung des Reaktors und der Mikroorganismen gewährleistet. Magnetventile 34 und 35 sorgen für das richtige Verteilungsverhältnis von luftgesättigtem Wasser zwischen Bioreaktor 8 und Reinwassertank 11. Ein chargenweiser Betrieb des Bioreaktors 8 ist aber ebenfalls möglich, bei dem ein Kreislauf durch die Leitung 33 die Lufversorgung übernimmt. Erst das vollständig geklärte Wasser wird an den Tank 11 gegeben.

Der Reinwassertank 11 nimmt das biologisch geklärte Wasser aus dem Bioreaktor 8 auf. Eine Füllstandsregelung 36 sorgt dafür, daß der Reinwassertank mit einer hinreichenden Wassermenge gefüllt ist, um den Waschbetrieb wie auch den Nacht-Kreislaufbetrieb aufrecht erhalten zu können. Für den Fall, daß sich eine zu geringe Wassermenge im Kreislauf befindet, kann über die Leitung 12 Frischwasser zugeführt werden.

Aus dem Reinwassertank 11 wird das Wasser über die Leitung 37 mit Hilfe der Pumpe 15 abgezogen und der Rücklaufleitung 13 in die Waschanlage zugeführt. Eine Entkeimungsanlage 18, vorzugsweise auf UV-Basis, um den Zusatz von bakteriziden Entkeimungsmitteln zu vermeiden, sorgt ggf. für die keimfreie Natur des Waschwassers. Ein mit Luft gefüllter Pufferbehälter 19 sorgt, in Verbindung mit der Pumpe 15, für einen gleichmäßigen Wasserfluß in die nachgeschaltete Waschanlage. Ein Druckmeßgerät 39 dient dabei zur Überwachung und Steuerung des Drucks.

Ein Ablauf 38 führt in die Kanalisation und dient dazu, in Zeiten überdurchschnittlichen Wasseranfalls Überschußwasser abzuleiten. Dies ist insbesondere dann zweckmäßig, wenn die Behandlungsanlage auch Oberflächenwasser aus einem Tankstellenbereich aufbereitet und durch heftige Niederschläge mit großen Wassermengen beaufschlagt wird.

Weitere Druckmeßpunkte befinden sich in der Leitung 27 zum Bioreaktor und 30 zum Reinwassertank und tragen die Bezugszeichen 40. Sie dienen der Überwachung des Arbeitsdrucks der Pumpen 9 und 10.

Für den Fall, daß in einem dieser Behälter eine weitgehende Zusetzung mit Schmutzpartikeln oder Biomasse vorliegt, wird ein Rückspülvorgang aus dem Reinwassertank 11 über die Leitungen 37, die Pumpe 15 und die Leitungen 16 und 17 in den Schwebstoffilter 7 und den Bioreaktor 8 eingeleitet. Das Wasser tritt in die Reaktoren über die untere Spinne 26 ein und spült die Schmutzpartikel bzw. Biomasse über den Überlauf 28 und die Leitung 14 in den Schlammfang 2. Auf diese Weise gelangen auch Mikroorganismen in den Schlammfang 2 und können diesen besiedeln und dort eine biologische Behandlung des sedimentierten Schmutzes bewirken.

In Zeiten geringer Waschaktivität, d. h. insbesondere nachts, an Wochenenden und Feiertagen, wird vorzugsweise ein Wasserkreislauf in Gang gehalten, um den Schwebstoffilter und den Bioreaktor in Betrieb zu halten. Dieser Kreislauf beginnt im Reinwassertank 11 und läuft über die Leitung 37, die Pumpe 15 und die Leitung 43 zurück in das Speicherbecken 3. Dabei ist das Magnetventil 44 über die zentrale Steuereinrichtung freigeschaltet. Gleichzeitig sind die Sperrventile 41 und 42 zur Waschanlage und in die Rückspülleitungen gesperrt. Der Kreislauf verläuft dann, wie im normalen Behandlungsbetrieb, vom Speicherbecken 3 über den Schwebstoffilter 7 und den Bioreaktor 8 in den Reinwassertank. Bei länger anhaltendem Kreislauf nähert sich die Qualität des im Kreislauf und den eingeschaltete Behältern befindlichen Wassers allmählich der Qualität des Wassers im Reinwassertank 11 an.

## Patentansprüche

1. Verfahren zur Aufbereitung von Abwasser aus Autowaschanlagen in einer mechanischen und einer biologischen Aufbereitungsstufe, wobei das Abwasser nach Durchlaufen eines Schlammfangs (2) in einem Speicherbecken (3) gesammelt wird, danach über einen Schwebstoffilter (7) in einen Bioreaktor (8) geführt wird, und nach der biologischen Klärung in einem Reinwasserbehälter (11) zur erneuten Wiederverwendung gesammelt wird, dadurch gekennzeichnet, daß bei Unterbrechung des Abwasserzulaufs in das Speicherbecken (3) ein Wasserkreislauf aus dem Reinwasserbecken (11) über das Speicherbecken (3), den Schwebstoffilter (7) und den Bioreaktor (8) aufrechterhalten wird.

2. Verfahren nach Anspruch 1, dadurch gekennzeichnet, daß das Abwasser im Bioreaktor (8) durch ein Festbett geführt wird, das aus einem für die organischen Inhaltsstoffe des Abwassers adsorptionsfähigen und porösen Trägermaterial besteht, welches mit an sich bekannten, diese Inhaltsstoffe abbauenden Mikroorganismen besiedelt ist.

3. Verfahren nach Anspruch 2, dadurch gekennzeichnet, daß das poröse Trägermaterial als Schüttgut vorliegt.

4. Verfahren nach Anspruch 2 oder 3, dadurch gekennzeichnet, daß das poröse Trägermaterial aus Kohle, Ton, Kieselgel oder Zeolithen in pelletisierter Form oder aus Schaumkunststoffflocken besteht.

5. Verfahren nach einem der vorstehenden Ansprüche, dadurch gekennzeichnet, daß der Schwebstoffilter (7) zur Freispülung diskontinuierlich mit Wasser aus dem Reinwasserbehälter (11) rückgespült wird.

6. Verfahren nach einem der vorstehenden Ansprüche, dadurch gekennzeichnet, daß der Bioreaktor (8) zur Freispülung diskontinuierlich mit Wasser aus dem Reinwasserbehälter (11) rückgespült wird.

7. Verfahren nach Anspruch 5 oder 6, dadurch gekennzeichnet, daß das Spülwasser in den Schlammfang (2) geführt wird.

8. Verfahren nach einem der vorstehenden Ansprüche, dadurch gekennzeichnet, daß dem Bioreaktor (8) mit Luft gesättigtes Wasser zugeführt wird.

9. Verfahren nach Anspruch 8, dadurch gekennzeichent, daß mit Luft gesättigtes Reinwasser aus dem Reinwassertank (11) oder der Zuleitung (30) vom Bioreaktor (8) zum Reinwassertank (11) in den Bioreaktor (8) zurückgeführt wird.

10. Verfahren nach einem der vorstehenden Ansprüche, dadurch gekennzeichnet, daß Reinwasser aus dem Reinwasserbehälter (11) in die Waschanlage zurückgeführt wird.

11. Verfahren nach Anspruch 10, dadurch gekennzeichnet, daß das rückgeführte Reinwasser mit UV-Licht entkeimt wird.

12. Abwasserreinigungsanlage, insbesondere zur Aufbereitung und Rückführung von Abwasser aus Autowaschanlagen, mit einer mechanischen und einer biologischen Reinigungsstufe, gekennzeichnet durch einen Schlammfang (2), ein Speicherbecken (3), einen Schwebstoffilter (7), einen Bioreaktor (8) und einen Reinwassertank (11), die in Reihe geschaltet und über Leitungen miteinander verbunden sind, wobei der Reinwassertank (11) über einen Rückleitung (14) mit dem Speicherbecken (3) verbunden ist, um bei unterbrochener Abwasserversorgung einen Wasserkreislauf über das Speicherbecken (3), den Schwebstoffilter (7) und den Bioreaktor (8) in den Reinwassertank (11) aufrechtzuerhalten.

13. Anlage nach Anspruch 12, dadurch gekennzeichnet, daß der Bioreaktor (8) ein Festbett aufweist, das aus einem für die organischen Inhaltsstoffe des Abwassers adsorptionsfähigen und porösen Trägermaterial besteht, welches mit an sich bekannten, die organischen Inhaltsstoffe des Abwassers abbauenden Mikroorganismen besiedelt ist.

14. Anlage nach Anspruch 13, dadurch gekennzeichnet, daß das poröse Trägermaterial als Schüttgut vorliegt.

15. Anlage nach Anspruch 13 oder 14, dadurch gekennzeichnet, daß das poröse Trägermaterial aus Kohle, Ton, Kieselgel oder Zeolithen in pelletisierter Form oder aus Schaumkunststoffflocken besteht.

16. Anlage nach einem der Ansprüche 12 bis 15, gekennzeichnet durch eine Rückspülleitung (16) vom Reinwassertank (11) zum Schwebstoffilter (7).

17. Anlagen nach einem der Ansprüche 12 bis 16, gekennzeichnet durch eine Rückspülleitung (17) vom Reinwasserbehälter (11) zum Bioreaktor (8).

18. Anlage nach Anspruch 16 oder 17, gekennzeichnet durch eine Rückleitung (14) vom Schwebstoffilter (7) bzw. Bioreaktor (8) zum Schlammfang (2) für rückgespültes Gut.

19. Anlage nach einem der Ansprüche 12 bis 18, gekennzeichnet durch eine Leitung (19) mit eingeschaltetem Luftinjektor (10) zur Rückleitung von Luft gesättigtem Reinwasser in den Bioreaktor (8).

20. Anlage nach einem der Ansprüche 12 bis 19, gekennzeichnet durch einen Trockenlaufschutz im Speicherbecken (2), Schwebstoffilter (7), Bioreaktor (8) und/oder Reinwassertank (11).

21. Anlage nach einem der Ansprüche 12 bis 20, dadurch gekennzeichnet, daß die Reinwasserleitung (13) aus dem Reinwassertank (11) eine Entkeimungsstufe (20) aufweist.

22. Anlage nach einem der Ansprüche 12 bis 21, gekennzeichnet durch Druckmesseinrichtungen, die dem Schwebstoffilter (7) und/oder dem Bioreaktor (8) nachgeschaltet sind.

## Claims

1. A method for treating waste water from carwashes in a mechanical and a biological treatment step, wherein the waste water after running through a silt chamber (2) is collected in a reservoir (3), then passed via an mechanical filter (7) into a bioreactor (8) and is collected for reuse after biological clarification in a clean-water tank (11), characterized in that upon interruption of waste-water inflow into the reservoir (3) a water cycle is maintained from the clean-water tank (11) via the reservoir (3), the mechanical filter (7) and the bioreactor (8).

2. The method of claim 1, characterized in that the waste water is passed within the bioreactor (8) through a fixed bed consisting of a porous supporting material adsorbent for the organic ingredients of the waste water and colonized with microorganisms known in the art for degrading said ingredients.

3. The method of claim 2, characterized in that the porous supporting material exists as bulk material.

4. The method of claim 2 or 3, characterized in that the porous supporting material consists of coal, clay, silica gel or zeolites in pelletized form or of plastic foam flakes.

5. The method of any of the above claims, characterized in that the mechanical filter (7) is washed free by being backwashed discontinuously with water from the clean-water tank (11).

6. The method of any of the above claims, characterized in that the bioreactor (8) is washed free by being backwashed discontinuously with water from the clean-water tank (11).

7. The method of claim 5 or 6, characterized in that the backwash water is passed into the silt chamber (2).

8. The method of any of the above claims, characterized in that the bioreactor (8) is fed water saturated with air.

9. The method of claim 8, characterized in that clean water saturated with air is recycled to the bioreactor (8) from the clean-water tank (11) or the feed pipe (30) from the bioreactor (8) to the clean-water tank (11).

10. The method of any of the above claims, characterized in that clean water is recycled to the carwash from the clean-water tank (11).

11. The method of claim 10, characterized in that the recycled clean water is degermed with UV light.

12. A waste-water treatment plant, in particular for treating and recycling waste water from carwashes, having a mechanical and a biological purifying step, characterized by a silt chamber (2), a reservoir (3), an mechanical filter (7), a bioreactor (8) and a clean-water tank (11) which are connected in series and interconnected via pipes, the clean-water tank (11) being connected via a return pipe (14) with the reservoir (3) to maintain a water cycle via the reservoir (3), the mechanical filter (7) and the bioreactor (8) into the clean-water tank (11) upon an interruption in waste-water supply.

13. The plant of claim 12, characterized in that the bioreactor (8) has a fixed bed consisting of a porous supporting material adsorbent for the organic ingredients of the waste water and colonized with microorganisms known in the art for degrading the organic ingredients of the waste water.

14. The plant of claim 13, characterized in that the porous supporting material exists as bulk material.

15. The plant of claim 13 or 14, characterized in that the porous supporting material consists of coal, clay, silica gel or zeolites in pelletized form or of plastic foam flakes.

16. The plant of any of claims 12 to 15, characterized by a backwash pipe (16) from the clean-water tank (11) to the mechanical filter (7).

17. The plant of any of claims 12 to 16, characterized by a backwash pipe (17) from the clean-water tank (11) to the bioreactor (8).

18. The plant of claim 16 or 17, characterized by a return pipe (14) from the mechanical filter (7) or bioreactor (8) to the silt chamber (2) for backwashed material.

19. The plant of any of claims 12 to 18, characterized by a pipe (19) with an inserted air injector (10) for returning air-saturated clean water to the bioreactor (8).

20. The plant of any of claims 12 to 19, characterized by a run-dry protection in the reservoir (2), mechanical filter (7), bioreactor (8) and/or clean-water tank (11).

21. The plant of any of claims 12 to 20, characterized in that the clean-water pipe (13) from the clean-water tank (11) has a degerming step (20).

22. The plant of any of claims 12 to 21, characterized by pressure measuring devices following the mechanical filter (7) and/or the bioreactor (8).

## Revendications

1. Procédé pour le traitement d'eaux usées provenant d'installations de lavage d'automobiles avec une étape de traitement mécanique et une étape de traitement biologique, selon lequel les eaux usées sont collectées, après avoir traversé un dispositif de collecte de boue (2), dans un bassin d'accumulation (3), puis sont envoyées par l'intermédiaire d'un filtre pour matières en suspension (7) dans un bioréacteur (8), et après la clarification biologique, sont collectées dans un réservoir d'eau pure (11) pour une nouvelle réutilisation, caractérisé en ce que lors de l'interruption de l'envoi d'eaux usées dans le bassin d'accumulation (3), une circulation d'eau est maintenue depuis le réservoir d'eau pure (11) en passant par le bassin d'accumulation (3), le filtre pour matières en suspension (7) et le bioréacteur (8).

2. Procédé selon la revendication 1, caractérisé en ce que les eaux usées sont envoyées dans le bioréacteur (8) à travers un lit fixe, qui est constitué par un matériau de support qui permet une adsorption des substances organiques contenues dans les eaux usées, est poreux et est peuplé de micro-organismes connus en soi, qui décomposent ces substances.

3. Procédé selon la revendication 2, caractérisé en ce que le matériau de support poreux est présent sous la forme d'un matériau en vrac.

4. Procédé selon la revendication 2 ou 3, caractérisé en ce que le matériau de support poreux est constitué par du charbon, de l'argile, du gel de silice ou de la zéolite sous forme de pastilles ou sous forme de flocons de matière plastique à l'état de mousse.

5. Procédé selon l'une des revendications précédentes, caractérisé en ce que, pour son libre rinçage, le filtre pour matières en suspension (7) est soumis de façon discontinue à un rétrolavage avec de l'eau provenant du réservoir d'eau pure (11).

6. Procédé selon l'une des revendications précédentes, caractérisé en ce que, pour son libre rinçage, le bioréacteur (8) est soumis de façon discontinue à un rétrobalayage avec de l'eau provenant du réservoir d'eau pure (11).

7. Procédé selon la revendication 5 ou 6, caractérisé en ce que l'eau de rinçage est guidée dans le dispositif de collecte de boue (2).

8. Procédé selon l'une des revendications précédentes, caractérisé en ce que de l'eau saturée d'air est envoyée au bioréacteur.

9. Procédé selon la revendication 8, caractérisé en ce que de l'eau pure saturée d'air est renvoyée au bioréacteur (8) depuis le réservoir d'eau pure (11) ou depuis la canalisation d'amenée (30) reliant le bioréacteur (8) au réservoir d'eau pure (11).

10. Procédé selon l'une des revendications précédentes, caractérisé en ce que de l'eau pure est renvoyée depuis le réservoir d'eau pure (11) dans l'installation de lavage.

11. Procédé selon la revendication 10, caractérisé en ce qu'une élimination des germes de l'eau pure renvoyée est exécutée au moyen d'un rayonnement ultraviolet.

12. Installation d'épuration d'eaux usées, notamment pour le traitement et la récupération d'eaux usées provenant d'installations de lavage d'automobiles, comportant une étape de nettoyage mécanique et une étape de nettoyage biologique, caractérisée par un dispositif de collecte de boue (2), un bassin d'accumulation (3), un filtre pour matières en suspension (7), un bioréacteur (8) et un réservoir d'eau pure (11), qui sont branchés en série et sont reliés entre eux par l'intermédiaire de canalisations, le réservoir d'eau pure (11) étant relié au bassin d'accumulation (3) par l'intermédiaire d'une canalisation de retour (14), de manière à maintenir, dans le cas où l'alimentation en eaux usées est interrompue, une circulation d'eau aboutissant au réservoir d'eau pure (11) en passant par le bassin d'accumulation (3), le filtre pour matières en suspension (7) et le bioréacteur (8).

13. Installation selon la revendication 12, caractérisée en ce que le bioréacteur (8) comporte un lit fixe, qui est constitué par un matériau de support qui permet une adsorption des substances organiques contenues dans les eaux usées, est poreux et est peuplé de micro-organismes connus en soi, qui décomposent les substances organiques contenues dans les eaux usées.

14. Installation selon la revendication 13, caractérisée en ce que le matériau de support poreux est présent sous la forme d'un matériau en vrac.

15. Installation selon la revendication 13 ou 14, caractérisée en ce que le matériau de support poreux est constitué par du charbon, de l'argile, du gel de silice ou de la zéolite sous forme de pastilles ou sous forme de flocons de matière plastique à l'état de mousse.

16. Installation selon l'une des revendications 12 à 15, caractérisée par une canalisation de rétrobalayage (16) qui s'étend du réservoir d'eau pure (11) jusqu'au filtre pour matières en suspension (7).

17. Installation selon l'une des revendications 12 à 16, caractérisée par une canalisation de rétrobalayage (17) qui s'étend du réservoir d'eau pure (11) jusqu'au bioréacteur (8) .

18. Installation selon la revendication 16 ou 17, caractérisée par une canalisation de retour (14) qui s'étend du filtre pour matières en suspension (7) ou du bioréacteur (8) jusqu'au dispositif de collecte de boue (2) pour la matière renvoyée par rétrobalayage.

19. Installation selon l'une des revendications 12 à 18, caractérisée par une canalisation (19), dans laquelle est inséré un injecteur d'air (10) et qui est utilisée pour renvoyer de l'eau pure saturée d'air, dans le bioréacteur (8).

20. Installation selon l'une des revendications 12 à 19, caractérisée par un dispositif de protection contre un fonctionnement à vide dans le bassin d'accumulation (2), dans le filtre pour matières en suspension (7) et dans le bioréacteur (8) et/ou dans le réservoir d'eau pure (11).

21. Installation selon l'une des revendications 12 à 20, caractérisée en ce que la canalisation d'eau pure (13), qui part du réservoir d'eau pure, comporte un étage de stérilisation (20).

22. Installation selon l'une des revendications 12 à 21, caractérisée par des dispositifs de mesure de pression qui sont branchés en aval du filtre pour matières en suspension (7) et/ou en aval du bioréacteur (8).
